(19) **Europäisches Patentamt / European Patent Office / Office européen des brevets**

(11) **EP 2 650 758 B1**

(12) **EUROPEAN PATENT SPECIFICATION**

(45) Date of publication and mention
of the grant of the patent:
**30.08.2017 Bulletin 2017/35**

(51) Int Cl.:
***G06F 3/0354*** *(2013.01)*

(21) Application number: **12163809.2**

(22) Date of filing: **11.04.2012**

(54) **Force-sensing stylus pointing device**

Styluszeigevorrichtung mit Kraftsensor

Stylet avec détection de force utilisé comme dispositif de pointage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.10.2013 Bulletin 2013/42**

(73) Proprietor: **BlackBerry Limited
Waterloo, ON N2K 0A7 (CA)**

(72) Inventor: **Besperstov, Iouri Petrovitch
Waterloo Ontario N2L 3W8 (CA)**

(74) Representative: **Roberts, Gwilym Vaughan et al
Kilburn & Strode LLP
20 Red Lion Street
London WC1R 4PJ (GB)**

(56) References cited:
**EP-A1- 0 718 750       EP-A2- 0 307 667
EP-A2- 0 622 753       WO-A1-88/05576
US-A1- 2003 146 906**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Stylus pointing devices are used to convey position information to a host electronic device. However, unlike a computer mouse that conveys relative motion, a stylus is designed to convey the absolute position of the stylus pen on a surface such as a tablet or screen. The position may be determined by a variety of methods, including detecting the interaction of the stylus with the electrical properties of the tablet (electromagnetic induction, electrical resistance, electrical capacitance), the optical properties of the tablet, or by ultrasonic location.

An active stylus has an ability to communicate with the host electronic device over a wired link or over a wireless communication link, such as a Radio-Frequency (RF) or Infrared (IR) link.

A stylus may be used in conjunction with a graphical user interface to enable user input to the host electronic device.

A common use of a stylus is to provide user input to a computer drawing or handwriting application. In this application the stylus is used both to draw lines and to interact with a user interface. For example, selection of the properties of the line is achieved by using a stylus to interact with a graphical user interface. Properties of a line to be drawn, such as the color or thickness of the line, may be selected by touching ('clicking') the stylus to a particular region of the screen or tablet. Alternatively, the color or thickness of a line may be selected by using the stylus to move a screen cursor to a particular region of the screen. A similar approach is used to select other properties of the line to be drawn.

US 2003/0146906 relates to a pressure sensitive pen including a coil and iron powder core.

It would be useful to provide a faster and more intuitive method for selecting line properties, such as line thickness, or other parameters.

BRIEF DESCRIPTION OF THE DRAWINGS

Example embodiments of the present disclosure will be described below with reference to the included drawings such that like reference numerals
refer to like elements and in which:

**FIG. 1** is a diagram of a force-sensitive stylus and host electronic device, in accordance with various example embodiments of the present disclosure.

**FIG. 2** shows a cross-section through a force-sensitive stylus, in accordance with various example embodiments of the present disclosure.

**FIG. 3A** and **FIG. 3B** are diagrams illustrating operation of a force-sensitive stylus, in accordance with various example embodiments of the present disclosure.

**FIG. 4** is a flow chart of a method for sensing stylus force, in accordance with various example embodiments of the present disclosure.

**FIG. 5** is a block diagram of a stylus control circuit, in accordance with various example embodiments of the present disclosure.

**FIG. 6** is a block diagram of a circuit of a host electronic device in accordance with various example embodiments of the present disclosure.

DETAILED DESCRIPTION

In accordance with the various example embodiments presented herein, user interaction with a host electronic device is improved through use of a force-sensitive stylus.

For simplicity and clarity of illustration, reference numerals may be repeated among the figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the example embodiments described herein.

The present disclosure relates to a force-sensitive stylus having a first electromagnetic coil, located at a fixed position within a housing and a second electromagnetic coil attached to a tip element and positioned to interact with the first electromagnetic coil. The tip element extends from one end of the housing and is moveably coupled to the housing by a compliant element, such that the position of the second electromagnetic coil relative to the first electromagnetic coil varies in dependence upon the force applied to the tip element. In operation, a control circuit energizes one of the first and second electromagnetic coils (i.e., the transmitting coil) with a radio frequency signal and senses the other of the first and second electromagnetic coils (i.e., the receiving coil) to determine the force on the tip element based on the relative displacement between the transmitting coil and receiving coil. The radio frequency signal also provides a wireless link to a host electronic device and is used to communicate the applied force to the host electronic device.

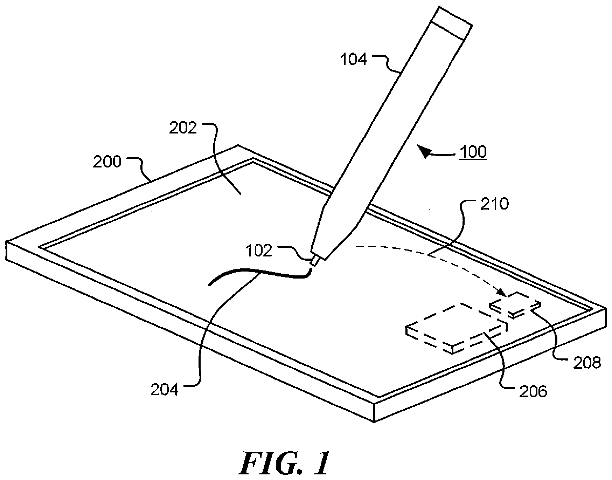

**FIG. 1** is a diagram of a force-sensitive stylus and host electronic device, in accordance with various example embodiments of the present disclosure. Referring to **FIG.1**, the force-sensitive stylus 100 is operable to interact with a host electronic device 200. In operation, the position of the stylus tip element 102, which extends from the elongated housing 104 of the stylus 100, relative to the surface of the host electronic device is detected and may be used to control the host electronic device. Detecting the positioning of the stylus may be performed by active means, where the stylus emits a signal that is detected by sensors in the host electronic device 200 or by passive means, where stylus interacts with a capacitive or resistive screen. Alternatively, the stylus may detect signals emitted from sources in the host electronic device. The signals may be, for example, electromagnetic, acoustic, optical, or a combination thereof. Various position detection methods are known, or will be apparent, to those of ordinary skill the art.

In one embodiment, the upper surface 202 of the host electronic device comprises a visual display screen. An image 204 may be displayed on the visual display screen 202 dependent upon the position of the tip element 102. The image 204 may be, for example, a line showing the current and prior positions of the tip element, or a cursor showing the current position of the tip element.

In a further embodiment, the host electronic device 200 comprises a drawing tablet that is operative linked to a computer or other host electronic device.

The host electronic device 200 incorporates a processor 206, an RF (radio frequency) communication receiver 208 plus auxiliary components (not shown) such as memory and clocks and associated components. The host electronic device may be, for example, a tablet computer, a laptop computer, a drawing table, a computer screen, a PDA, a mobile telephone, a gaming device, an electronic reader, a television screen, or other portable device.

The RF communication receiver 208 is configured to receive RF signals 210 from a transmission coil in the stylus 100.

In a further embodiment, the host electronic device comprises a position detection device that receives and/or transmits signals from the stylus 100.These signals may be used to locate the position of the stylus using techniques known to those of ordinary skill in the art. The position detection device may be linked to a computer or other host electronic device.

In some embodiments, the position of the tip element 102 provides an input to a computer program executing on a processor 206 of the host electronic device 200, or on a processor operatively coupled to the host electronic device 200. A common use for a stylus is for controlling a drawing tool in a computer-implemented drawing system. In this application, the stylus 100 replaces drawing tools such as pens and brushes commonly used for drawing. Since the stylus 100 may be used to control a variety of different drawing tools, a user is provided with methods for selecting different tools and for selecting the properties of those tools. Pen tool properties include line width and color, while brush tool properties additionally include opacity, grain, angle, jitter, re-saturation, bleed, flow, and depth. These properties are typically selected by user interaction with a graphical user interface displayed on the visual display screen.

When using a physical drawing tool, such as a brush or nibbed pen, the width of the line drawn may be continually varied by altering the force on the tool. Such continual variation cannot be readily achieved in an electronic environment through interaction with a graphical user interface.

For a stylus to more closely simulate a physical drawing tool, it is desirable to detect the applied pressure of the stylus on the display screen, and communicate that information to the computer application such that properties of elements generated on the display screen are controlled through variations in the applied pressure.

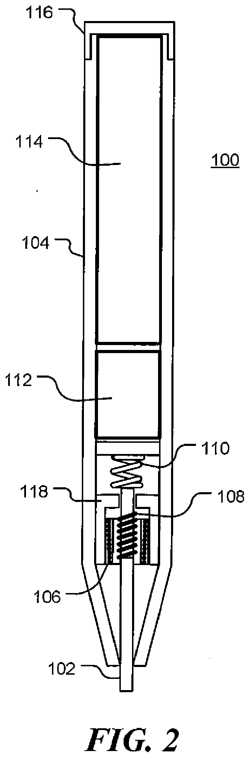

**FIG. 2** shows a cross-section through a force-sensitive stylus 100, in accordance with various example embodiments of the present disclosure. Referring to **FIG. 2**, the force-sensitive active stylus 100 has a tip element 102 that extends from one end of an elongated housing 104. The tip element 102 is moveably coupled to the elongated housing 104 by a compliant element 110. A first electromagnetic coil 106 is located at a fixed position within the elongated housing 104 and a second electromagnetic coil 108 is attached to the tip element. The second electromagnetic coil 108 is positioned to interact with the first electromagnetic coil 106, such that the position of the second electromagnetic coil 108 relative to the first electromagnetic coil 106 is dependent upon the force applied to the tip element 102. In operation, force on the tip element 102 causes the compliant element 110 to be compressed so that the relative positions of the coils and the length of the second electromagnetic coil 108 located within the first electromagnetic coil 106 are altered.

Compliant element 110 is shown as a coil spring in **FIG. 2**, but other springs may be used. Alternatively, the spring may be replaced with a compliant material, such as synthetic on natural rubber.

When an electric current is supplied to one coil of the first and second electromagnetic coils, an electromagnetic field is generated. The energized coil will be referred to as the transmitting coil. The electromagnetic field, in turn, induces a current in the other electromagnetic coil, which will be referring to as the "receiving" or "sensing" coil. The induced current depends, at least in part, on the position of the receiving coil relative to the transmitting coil. In **FIG. 2**, the second (sensing or receiving) coil is shown as located inside and in concentric alignment with the first (transmitting) coil. In an alternative embodiment the first (fixed) coil is located inside and in concentric alignment with the second (moving) coil. The outer coil may be used as the transmitting coil. Other coil arrangements may be used without departing from the present invention.

A control circuit 112 is operatively coupled to the first and second electromagnetic coils and is configured to sense the force applied to the tip element 102 by sensing the current, or a signal dependent upon the current, induced in the receiving coil. This current depends upon the relative positions of the first and second electromagnetic coils, which, in turn, depends upon the force applied to the tip element 102.

In accordance with one aspect of the present disclosure, the fixed coil 106 is used transmit a signal dependent upon the relative positions of the first and second electromagnetic coils to a receiver in the host electronic device (such as 208 shown in **FIG. 1**). The transmitted signal comprises a radio frequency (RF) signal in which the force measurement is encoded using Frequency Shift Keying (FSK), Phase Shift Keying (PSK) or other coding means. Many such coding schemes are known to those of ordinary skill in the art. In order to transmit the signal, the transmitting coil is energized. The signal transmission induces a current in the receiving coil that can then be sensed to provide a new force measurement. Thus, the transmitting coil is used both as a communication means and as a force sensing means.

In one embodiment, the force sensitive stylus 100 is powered by battery 114 located within the elongated housing 104. The battery 114 may be accessed via screw cap 116, for example.

In order to maintain correct alignment between the two electromagnetic coils, a guide 118 may be used. The guide 118 may fixed to the elongated housing 104 and allow the tip element 102 to slide through it, or the guide 118 may be fixed to the tip element 102 and be in sliding contact with the interior of the elongated housing 104.

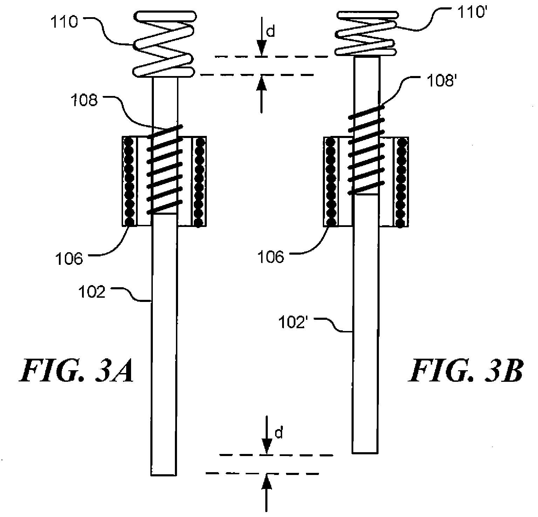

**FIG's 3A** and **3B** are diagrams illustrating operation of a force-sensitive stylus, in accordance with various example embodiments of the present disclosure. **FIG. 3A** shows a spatial relationship between a first electromagnetic coil 106 and a second electromagnetic coil 108 when low, or zero, force is applied to the lower end of stylus tip element 102. In this case there is little or no compression of the compliant element 110, since the compression of the compliant element 110 is substantially proportional to the force applied to it by the tip element 102. As a force is applied to the tip element 102, the compliant element is compressed to a compressed configuration denoted by 110' in **FIG. 3B**. The amount of deflection, denoted as d in the figures, is proportional to the increase in the force applied to the tip element and inversely proportional to the stiffness of the compliant element. The tip element, shown as 102' in **FIG. 3B**, and the second electromagnetic coil, shown as 108' in **FIG. 3B**, are similarly displaced by an amount d relative to the first electromagnetic coil 106. In one embodiment, the fixed coil 106 is energized to generate a magnetic field. The current induced in the second coil 108 is proportional to the length of the coil in the magnetic field. In **FIG. 3A**, the length of the second coil in the magnetic field is denoted as *L*. In **FIG. 3B** the length is reduced by an amount *d*. The induced current is reduced, approximately, by an amount $\delta I$ which is approximately related to the displacement d and to the change in force $\delta F$ by

$$\delta I = \frac{d}{L} I = \delta F \cdot \frac{I}{KL}, \qquad (1)$$

where $\delta F$ is the increase in the force applied to the tip element and $K$ is the spring constant for the compliant element 110. Thus, the change in force, $\delta F$, is related to the change in current, $\delta I$, by

$$\delta F = \delta I \frac{KL}{I}, \qquad (2)$$

The change in force is proportional to the change in current, $\delta I$. The spring constant $K$ may be chosen to control the range of movement of the tip element relative to the elongated housing. In practice, because of the complexity of the magnetic field at the end of the transmitting coil for example, the relation is more complex, but may be determined by a calibration procedure.

In one embodiment, the current is determined by measuring the voltage across a resistor. Since the induced current is a high frequency alternating current, a quantity related to the amplitude of the induced current is measured.

An advantage of the disclosed stylus is that the force-sensing mechanism is substantially insensitive to temperature changes.

In one embodiment, the force signal to be transmitted is derived from the change in the current induced in the sensing coil.

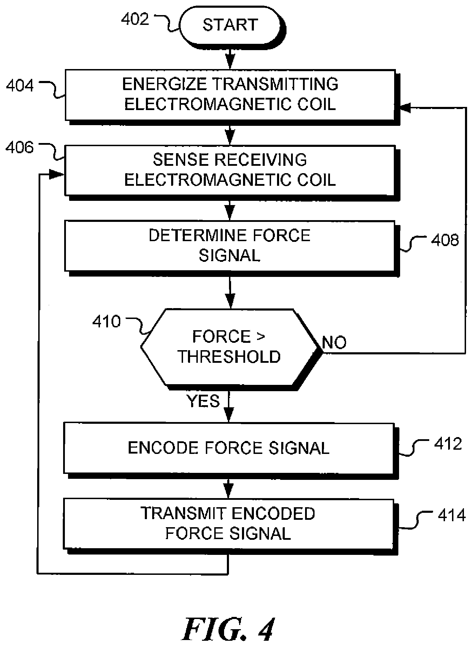

**FIG. 4** is a flow chart of an example method for sensing a force on a tip element that extends from an end of a stylus and is coupled to the stylus via a compliant element. Flow begins at start block 402. At block 404 a transmitting electromagnetic coil is energized by passing a current through it. At block 406, the amplitude of the current induced in the receiving electromagnetic coil is sensed. At block 408, the force on the stylus is determined from the amplitude of the sensed current. If the force is greater than a given threshold, as depicted by the positive branch from decision block 410, the force signal is encoded at block 412 and transmitted to a host electronic device at block 414. Since transmission is achieved by re-energizing the transmitting electromagnetic coil, flow then returns to block 406. The transmission from the transmitting coil induces a current in the sensing or receiving coil. If the force is below the given threshold, as depicted by the negative branch from decision block 410, flow returns to block 404 and the process continues. In order to preserve battery power when the stylus is not in use, the process may be repeated at a lower rate when the force is below the threshold, and, optionally, a lower energizing current may be used.

The transmitted signal may comprise an encoded digital representation of the force measurement. Once received at an input of the host electronic device, the signal is used to control operation of the host electronic device. In one embodiment a property of a line (such as its thickness) displayed on a screen of the host electronic device is adjusted dependent upon the received force signal.

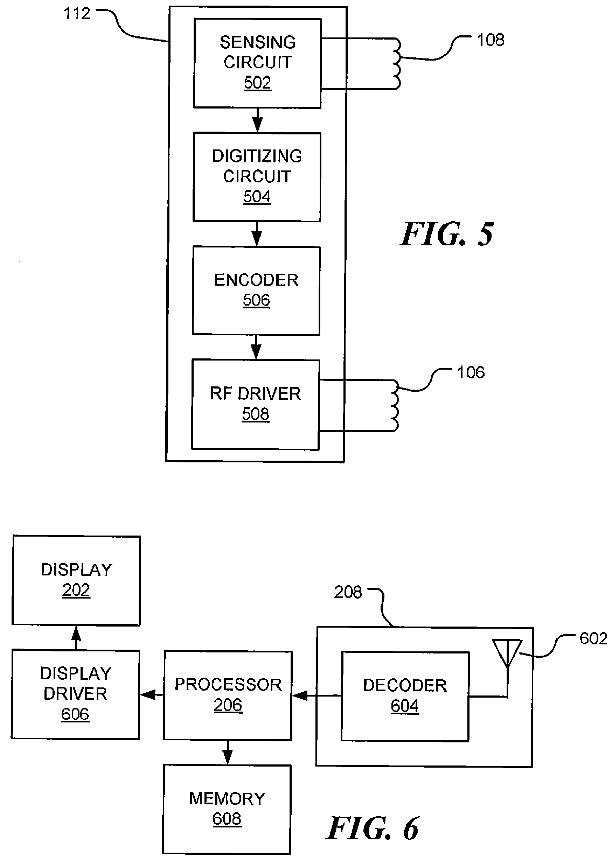

**FIG. 5** is a block diagram of a stylus control circuit, in accordance with various example embodiments of the present disclosure. Referring to **FIG. 5**, the control circuit 112 includes a sensing circuit 502 that receives input from the receiving or sensing coil 108 of the stylus. The sensing circuit outputs a signal dependent upon the force applied to the stylus tip element to a digitizing circuit 504. The digitized signal is then passed to an encoder 506. In some embodiments, the amplitude of the encoded signal is held constant to facilitate force sensing. For example, the encoder may use frequency shift keying or phase shift keying. The encoded force signal is passed to an RF driver circuit 508 that produces an RF signal to drive the transmitting coil 106. The electromagnetic field produced by the transmitting coil 106 induces a current in the receiving coil 108, which is sensed by the sensing circuit 502. The process of driving the coil 106 and sensing the coil 108 is repeated to provide regular measurements of the force applied to the stylus tip element.

**FIG. 6** is a block diagram of a circuit of a host electronic device in accordance with various example embodiments of the present disclosure. As described above in reference to **FIG. 5**, the transmitting coil of the stylus is driven by an RF signal and produces an electromagnetic field. This field may be sensed by a host processor. Referring now to **FIG. 6**, the electromagnetic field from the stylus is detected at antenna 602 of the RF receiver 208 of the host electronic device. The resulting signal is decoded in decoder 604 and the decoded force signal is passed to the processor 206 of the host electronic device. The force signal is used to control operation of the processor. In particular, the force signal may be used as an input to drawing on writing software application executed on the processor. For example, the force signal could be used to control the width of a line produced by a drawing application. The output from the application (an electronic drawing for example) may be passed to a display driver 606 and displayed on a screen 202 of the host electronic device. The output from the application may be stored in a memory 608. The memory may be local to the device or remote from it and connected via a communication link.

The implementations of the present disclosure described above are intended to be examples only. Those of skill in the art can effect alterations, modifications and variations to the particular example embodiments herein without departing from the intended scope of the present disclosure. Moreover, selected features from one or more of the above-described example embodiments can be combined to create alternative example embodiments not explicitly described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The described example embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

**Claims**

1. A force-sensitive stylus (100) comprising:

   a housing (104);
   a first electromagnetic coil (106) located at a fixed position within the housing;
   a compliant element (110);
   a tip element (102) extending from one end of the housing and moveably coupled to the housing by the compliant element;
   a second electromagnetic coil (108) attached to the tip element and positioned to interact with the first electromagnetic coil, the position of the second electromagnetic coil relative to the first electromagnetic coil dependent upon a force applied to the tip element; and
   a control circuit (112) operable to energize a transmitting coil of the first and second electromagnetic coils with a radio frequency signal and further operable to determine the amplitude of a current induced in the receiving coil of the first and second electromagnetic coils (106, 108) by energizing the transmission coil and determine the force on the tip element, wherein the control circuit is further operable to adjust the radio frequency signal in order to encode the determined force into the radio frequency signal.

2. A force-sensitive stylus (100) in accordance with claim 1, wherein the radio frequency signal is encoded using Frequency Shift Keying (FSK).

3. A force-sensitive stylus in accordance with claim 1, wherein the transmitting coil comprises the first electromagnetic coil (106) and the receiving coil comprises the second electromagnetic coil (108), and wherein the second electromagnetic coil (108) is in concentric alignment with the first electromagnetic coil.

4. An electronic device (200) comprising:

   a processor (206);
   a display screen (202) controllable by the processor; and
   a stylus (100) as claimed in any preceding claim;
   the processor operable to render an image on the display screen dependent upon the force data and position of the tip element (102) of the stylus.

5. An electronic device (200) in accordance with claim 4, wherein
   the radio frequency signal communicates the force data to the processor.

6. An electronic device (200) in accordance with claim 5: and
   further comprising:

   a radio frequency communication receiver (208) operatively coupled to the processor and operable to receive the radio frequency signal from the stylus (100), or
   wherein the processor (206) is operable to render a line on the visual display screen (202), the position of the line being dependent upon the position of the stylus on the visual display screen, and the thickness of the line being dependent upon the radio frequency signal transmitted from the force-sensitive stylus.

7. A method for sensing a force on a tip element (102) that extends from an end of a stylus (100) and is moveably coupled to the stylus via a compliant element (110), the method comprising:

   passing a radio frequency signal through a first electromagnetic coil (106);
   sensing an electrical current induced in a second electromagnetic coil (108);
   determining the force on the tip element dependent upon the induced electrical current; and adjusting the radio frequency signal dependent upon the determined force on the tip element to encode the determined force into the radio frequency signal, where one of the first and second electromagnetic coils is located at a fixed position within the stylus and the other coil of the first and second electromagnetic coils is coupled to the tip element.

8. A method in accordance with claim 7, wherein determining the force on the tip element (102) dependent upon the sensed electrical current comprises determining the amplitude of the induced electrical current.

9. A method in accordance with claim 8, wherein adjusting the radio frequency signal, dependent upon the force on the tip element (102) comprises:

forming a digital representation of the force dependent upon the sensed electrical current; and encoding the digital representation.

10. A method in accordance with claim 7, further comprising:

receiving the radio frequency signal at an RF receiver (208) of a host electronic device (200); and controlling operation of the host electronic device dependent upon the received radio frequency signal, optionally wherein controlling operation of the host electronic device dependent upon the received radio frequency signal comprises:

adjusting a property of a line displayed on a screen (202)of the host electronic device dependent upon the received radio frequency signal, or

wherein controlling operation of the host electronic device dependent upon the received radio frequency signal comprises:

adjusting the thickness of a line displayed on a screen of the host electronic device dependent upon the received radio frequency signal.

11. A method in accordance with claim 7, wherein adjusting the radio frequency signal dependent upon the force on the tip element (102) comprises encoding a value dependent upon the force using frequency shift keying.

12. A method in accordance with claim 7, wherein the radio frequency signal has constant amplitude.

13. A method in accordance with claim 7 further comprising repeating the passing, the sensing, the determining and the adjusting elements.

**Patentansprüche**

1. Kraftsensitiver Stylus (100), der aufweist:

ein Gehäuse (104);
eine erste elektromagnetische Spule (106), die an einer festen Position innerhalb des Gehäuses angeordnet ist;
ein nachgiebiges Element (110);
ein Spitzenelement (102), das sich von einem Ende des Gehäuses erstreckt und durch das nachgiebige Element bewegbar mit dem Gehäuse gekoppelt ist;
eine zweite elektromagnetische Spule (108), die an dem Spitzenelement befestigt ist und positioniert ist zum Interagieren mit der ersten elektromagnetischen Spule, wobei die Position der zweiten elektromagnetischen Spule relativ zu der ersten elektromagnetischen Spule abhängig ist von einer Kraft, die auf das Spitzenelement ausgeübt wird; und
eine Steuerschaltung (112), die betriebsfähig ist zum mit-Energie-Versehen einer Sendespule der ersten und zweiten elektromagnetischen Spulen mit einem Funkfrequenzsignal und weiter betriebsfähig ist zum Bestimmen der Amplitude eines Stroms, der in der Empfangsspule der ersten und zweiten elektromagnetischen Spulen (106, 108) induziert ist durch Versehen der Sendespule mit Energie, und Bestimmen der Kraft auf das Spitzenelement,
wobei die Steuerschaltung weiter betriebsfähig ist zum Anpassen des Funkfrequenzsignals, um die bestimmte Kraft in das Funkfrequenzsignal zu codieren.

2. Kraftsensitiver Stylus (100) gemäß Anspruch 1, wobei das Funkfrequenzsignal unter Verwendung von Frequenzumtastung (FSK - Frequency Shift Keying) codiert wird.

3. Kraftsensitiver Stylus gemäß Anspruch 1, wobei die Sendespule die erste elektromagnetische Spule (106) aufweist und die Empfangsspule die zweite elektromagnetische Spule (108) aufweist und wobei die zweite elektromagnetische Spule (108) in konzentrischer Ausrichtung mit der ersten elektromagnetischen Spule ist.

4. Eine elektronische Vorrichtung (200), die aufweist:

einen Prozessor (206);
einen Anzeigebildschirm (202), der durch den Prozessor steuerbar ist; und
einen Stylus (100) gemäß einem vorhergehenden Anspruch;
wobei der Prozessor betriebsfähig ist zum Darstellen eines Bilds auf dem Anzeigebildschirm abhängig von den Kraftdaten und der Position des Spitzenelements (102) des Stylus.

5. Eine elektronische Vorrichtung (200) gemäß Anspruch 4, wobei das Funkfrequenzsignal die Kraftdaten an den Prozessor kommuniziert.

6. Eine elektronische Vorrichtung (200) gemäß Anspruch 5, und weiter aufweisend:

einen Funkfrequenzkommunikationsempfänger (208), der betriebsfähig mit dem Prozessor gekoppelt ist und betriebsfähig ist zum Empfangen des Funkfrequenzsignals von dem Stylus (100), oder
wobei der Prozessor (206) betriebsfähig ist zum Darstellen einer Linie auf dem visuellen Anzeigebildschirm (202), wobei die Position der Linie von der Position des Stylus auf dem visuellen Anzeigebildschirm abhängig ist und
die Dicke der Linie von dem Funkfrequenzsignal abhängig ist, das von dem kraftsensitiven Stylus gesendet wird.

7. Ein Verfahren zum Erfassen einer Kraft auf ein Spitzenelement (102), das sich von einem Ende eines Stylus (100) erstreckt und bewegbar mit dem Stylus über ein nachgiebiges Element (110) gekoppelt ist, wobei das Verfahren aufweist:

Leiten eines Funkfrequenzsignals durch eine erste elektromagnetische Spule (106);
Erfassen eines elektrischen Stroms, der in eine zweite elektromagnetische Spule (108) induziert wird;
Bestimmen der Kraft auf das Spitzenelement abhängig von dem induzierten elektrischen Strom; und
Anpassen des Funkfrequenzsignals abhängig von der bestimmten Kraft auf das Spitzenelement, um die bestimmte Kraft in das Funkfrequenzsignal zu codieren,
wobei eine der ersten und zweiten elektromagnetischen Spulen an einer festen Position innerhalb des Stylus angeordnet ist und die andere Spule der ersten und zweiten elektromagnetischen Spulen mit dem Spitzenelement gekoppelt ist.

8. Ein Verfahren gemäß Anspruch 7, wobei das Bestimmen der Kraft auf das Spitzenelement (102) abhängig von dem erfassten elektrischen Strom ein Bestimmen der Amplitude des induzierten elektrischen Stroms aufweist.

9. Ein Verfahren gemäß Anspruch 8, wobei das Anpassen des Funkfrequenzsignals abhängig von der Kraft auf das Spitzenelement (102) aufweist:

Bilden einer digitalen Repräsentation der Kraft abhängig von dem erfassten elektrischen Strom; und
Codieren der digitalen Repräsentation.

10. Ein Verfahren gemäß Anspruch 7, das weiter aufweist:

Empfangen des Funkfrequenzsignals an einem RF-Empfänger (208) einer elektronischen Hostvorrichtung (200); und
Steuern eines Betriebs der elektronischen Hostvorrichtung abhängig von dem empfangenen Funkfrequenzsignal, optional
wobei das Steuern eines Betriebs der elektronischen Hostvorrichtung abhängig von dem empfangenen Funkfrequenzsignal aufweist:

Anpassen einer Eigenschaft einer auf einem Bildschirm (202) der elektronischen Hostvorrichtung angezeigten Zeile abhängig von dem empfangenen Funkfrequenzsignal, oder

wobei das Steuern eines Betriebs der elektronischen Hostvorrichtung abhängig von dem empfangenen Funkfrequenzsignal aufweist:

Anpassen der Dicke einer Zeile, die auf einem Bildschirm der elektronischen Hostvorrichtung angezeigt wird, abhängig von dem empfangenen Funkfrequenzsignal.

**11.** Ein Verfahren gemäß Anspruch 7, wobei das Anpassen des Funkfrequenzsignals abhängig von der Kraft auf das Spitzenelement (102) ein Codieren eines Werts abhängig von der Kraft unter Verwendung einer Frequenzumtastung aufweist.

**12.** Ein Verfahren gemäß Anspruch 7, wobei das Funkfrequenzsignal eine konstante Amplitude hat.

**13.** Ein Verfahren gemäß Anspruch 7, das weiter ein Wiederholen des Leitens, des Erfassens, des Bestimmens und des Anpassens von Elementen aufweist.

**Revendications**

**1.** Stylet sensible à une force (100), comprenant :

un boîtier (104) ;
une première bobine électromagnétique (106) située à une position fixe à l'intérieur du boîtier ;
un élément élastique (110) ;
un élément pointe (102) s'étendant d'une extrémité du boîtier et couplé mobile au boîtier par l'élément élastique ;
une seconde bobine électromagnétique (108) reliée à l'élément pointe et positionnée de façon à interagir avec la première bobine électromagnétique, la position de la seconde bobine électromagnétique par rapport à la première bobine électromagnétique dépendant d'une force appliquée à l'élément pointe ; et
un circuit de commande (112) pouvant servir à exciter une bobine de transmission des première et seconde bobines électromagnétiques à l'aide d'un signal radiofréquence, et pouvant en outre servir à déterminer l'amplitude d'un courant induit dans la bobine de réception des première et seconde bobines électromagnétiques (106, 108) par excitation de la bobine de transmission et à déterminer la force appliquée à l'élément pointe, dans lequel le circuit de commande peut en outre servir à régler le signal radiofréquence afin de coder la force déterminée en signal radiofréquence.

**2.** Stylet sensible à une force (100) selon la revendication 1, dans lequel le signal radiofréquence est codé par modulation par déplacement de fréquence (MDF).

**3.** Stylet sensible à une force selon la revendication 1, dans lequel la bobine de transmission comprend la première bobine électromagnétique (106) et la bobine de réception comprend la seconde bobine électromagnétique (108), et dans lequel la seconde bobine électromagnétique (108) est en alignement concentrique avec la première bobine électromagnétique.

**4.** Dispositif électronique (200), comprenant :

un processeur (206) ;
un écran d'affichage (202) pouvant être commandé par le processeur ; et
un stylet (100) selon l'une quelconque des revendications précédentes ;
le processeur pouvant servir à restituer une image sur l'écran d'affichage en fonction des données de force et de la position de l'élément pointe (102) du stylet.

**5.** Dispositif électronique (200) selon la revendication 4, dans lequel
le signal radiofréquence communique les données de force au processeur.

**6.** Dispositif électronique (200) selon la revendication 5, et
comprenant en outre :

un récepteur de communication radiofréquence (208) couplé de manière fonctionnelle au processeur et pouvant servir à recevoir le signal radiofréquence du stylet (100), ou
dans lequel le processeur (206) peut servir à restituer une ligne sur l'écran d'affichage visuel (202), la position de la ligne dépendant de la position du stylet sur l'écran d'affichage visuel, et l'épaisseur de la ligne dépendant du signal radiofréquence transmis à partir du stylet sensible à une force.

**7.** Procédé de détection d'une force appliquée à un élément pointe (102) qui s'étend d'une extrémité d'un stylet (100) et qui est couplé mobile au stylet par le biais d'un élément élastique (110), le procédé consistant à :

faire passer un signal radiofréquence à travers une première bobine électromagnétique (106) ;
détecter un courant électrique induit dans une seconde bobine électromagnétique (108) ;
déterminer la force appliquée à l'élément pointe en fonction du courant électrique induit ; et
régler le signal radiofréquence en fonction de la force déterminée appliquée à l'élément pointe de façon à coder la force déterminée en signal radiofréquence,
une bobine des première et seconde bobines électromagnétiques étant située à une position fixe à l'intérieur du stylet et l'autre bobine des première et seconde bobines électromagnétiques étant couplée à l'élément pointe.

**8.** Procédé selon la revendication 7, dans lequel la détermination de la force appliquée à l'élément pointe (102) en fonction du courant électrique détecté consiste en outre à déterminer l'amplitude du courant électrique induit.

**9.** Procédé selon la revendication 8, dans lequel le réglage du signal radiofréquence en fonction de la force appliquée à l'élément pointe (102) consiste à :

former une représentation numérique de la force en fonction du courant électrique détecté ; et
coder la représentation numérique.

**10.** Procédé selon la revendication 7, consistant en outre à :

recevoir le signal radiofréquence au niveau d'un récepteur RF (208) d'un dispositif électronique hôte (200) ; et
commander le fonctionnement du dispositif électronique hôte en fonction du signal radiofréquence reçu,
dans lequel l'opération de commande du dispositif électronique hôte en fonction du signal radiofréquence reçu consiste éventuellement à :

régler une propriété d'une ligne affichée sur un écran (202) du dispositif électronique hôte en fonction du signal radiofréquence reçu, ou
dans lequel l'opération de commande du dispositif électronique hôte en fonction du signal radiofréquence reçu consiste à :

régler l'épaisseur d'une ligne affichée sur un écran du dispositif électronique hôte en fonction du signal radiofréquence reçu.

**11.** Procédé selon la revendication 7, dans lequel le réglage du signal radiofréquence en fonction de la force appliquée à l'élément pointe (102) consiste à coder une valeur en fonction de la force en faisant intervenir une modulation par déplacement de fréquence.

**12.** Procédé selon la revendication 7, dans lequel le signal radiofréquence a une amplitude constante.

**13.** Procédé selon la revendication 7, consistant en outre à répéter les étapes de passage, de détection, de détermination et de réglage.

**FIG. 1**

**FIG. 2**

110

108

106

102

*FIG. 3A*

110'

108'

106

102'

*FIG. 3B*

d

d

FIG. 4

112

SENSING
CIRCUIT
502

108

DIGITIZING
CIRCUIT
504

*FIG. 5*

ENCODER
506

RF DRIVER
508

106

DISPLAY
202

208

602

DISPLAY
DRIVER
606

PROCESSOR
206

DECODER
604

MEMORY
608

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030146906 A